# EUROPÄISCHE PATENTSCHRIFT

(11) **EP 3 507 191 B1**
(45) Veröffentlichungstag und Bekanntmachung des Hinweises auf die Patenterteilung: **18.03.2020**
(21) Anmeldenummer: 17767742.4
(22) Anmeldetag: 29.08.2017
(51) Int. Cl.: B63G 8/34, B01D 19/00, B63G 13/02

(54) **VORRICHTUNG ZUR REDUKTION DER AKUSTISCHEN SIGNATUR AUF MILITÄRISCHEN WASSERFAHRZEUGEN**
DEVICE FOR REDUCING THE ACOUSTIC SIGNATURE OF MILITARY WATERCRAFT
DISPOSITIF PERMETTANT DE RÉDUIRE LA SIGNATURE ACOUSTIQUE DE SOUS-MARINS MILITAIRES

(30) Priorität: 02.09.2016 DE 102016216647
(43) Veröffentlichungstag der Anmeldung: 10.07.2019
(73) Patentinhaber: thyssenkrupp Marine Systems GmbH, 24143 Kiel (DE); thyssenkrupp AG, 45143 Essen (DE)
(72) Erfinder: VÖGE, Thomas, 24235 Laboe (DE); GOSSLAR, Jana, 24103 Kiel (DE)
(74) Vertreter: thyssenkrupp Intellectual Property GmbH
(86) Internationale Anmeldenummer: PCT/EP2017/071678
(87) Internationale Veröffentlichungsnummer: WO 2018/041842

(56) Entgegenhaltungen:
- DE-A1-102012 207 383
- FR-A1- 2 836 983

## Beschreibung

Die Erfindung betrifft eine Vorrichtung zur Reduktion der akustischen Signatur auf militärischen Wasserfahrzeugen.

Auf militärischen Wasserfahrzeugen, insbesondere auf Unterseebooten werden oftmals drei grundlegende Fahrt- oder Betriebszustände unterschieden. Diese drei Betriebszustände sind Marschfahrt, Ortungsfahrt und Schleichfahrt. Insbesondere bei Schleichfahrt soll eine Ortung vermieden werden, Geräuschemissionen sind daher unbedingt zu vermeiden.

Gerade während der Schleichfahrt kommt es zum Beispiel zu der Situation, dass ein Waffenrohr geflutet werden soll. Hierbei sollte der Gegner gerade nicht durch eine Geräuschentwicklung auf die Anwesenheit eines Unterseeboots hingewiesen werden.

Entsprechende Situationen sind zum Beispiel das Ausbringen von Torpedos, Minen, Tauchern oder anderen Gerätschaften in feindlichen Gewässern, aber auch das Ausbringen von Bojen, Drohnen und der Gleichen. Hierfür verfügt ein Unterseeboot oftmals neben den Waffenrohren auch über andere Ausbringsysteme, zum Beispiel eine Boltschleuse oder auch externe Lagerungsvorrichtungen.

Um beispielsweise ein Torpedo ausstoßen zu können, muss zunächst das Waffenrohr geflutet werden. Im normalen Zustand ist das Waffenrohr oder auch eine andere entsprechende Vorrichtung trocken, um Korrosion, Algenwachstum und der Gleichen vollständig zu verhindern. Daher erfolgt ein Fluten, zum Beispiel des Waffenrohrs, im Betriebszustand Schleichfahrt und muss ohne Geräuschentwicklung erfolgen.

Beim Fluten des Waffenrohres wird Wasser in das Waffenrohr geleitet und die verdrängte Luft in das Bootsinnere abgeführt. Hierbei ist es jedoch insbesondere zum Ende des Vorgangs so, dass der Luftstrom Wasser mitreißt und sich somit ein Luft-Wasser-Gemisch bildet. Daher muss das Wasser aus diesem Gemisch durch eine Luft-Wasser-Trennvorrichtung von der Luft abgetrennt werden.

Beim Entwässern ergibt sich eine analoge Problematik, da nun das Wasser aus dem Waffenrohr zurück in eine Ausgleichszelle befördert werden muss, wobei Luft aus der Ausgleichszelle entweicht und Wasser mitreißen kann. Dieser Prozess findet zum Beispiel nach dem Abschuss einer ersten Waffe vor dem Nachladen statt. Aber auch bei der Aufnahme eines Tauchers durch ein Waffenrohr oder eine Schleuse tritt dieser Vorgang auf.

Hierbei ist zu beachten, dass ein Waffenrohr ein Volumen von etwa 3 m³ haben kann, Taucherschleusen können noch deutlich größer sein. Dieses Volumen muss in vergleichsweise kurzer Zeit vollständig getauscht werden, sodass vergleichsweise hohe Volumenströme auftreten.

Dokument DE 10 2012 207383 A1 offenbart eine Vorrichtung zur Trennung eines Luft-Wasser-Gemisches. Der Trennbereich dieser Vorrichtung ist nicht schwingungsentkoppelt.

Die bisher eingesetzten Trennvorrichtungen führen nicht zu einer vollständigen Trennung, sodass das aus der Trennvorrichtung ausströmende Wasser Luft mit sich reißt. Dieses verursacht störende Geräusche.

Aufgabe der Erfindung ist es, eine Vorrichtung bereit zu stellen, die eine geräuschfreie Trennung von Luft und Wasser für die oben beschriebenen Anwendungen ermöglicht.

Gelöst wird diese Aufgabe durch eine Vorrichtung mit den in Anspruch 1 angegebenen Merkmalen. Vorteilhafte Weiterbildungen ergeben sich aus den Unteransprüchen, der nachfolgenden Beschreibung sowie den Zeichnungen.

Die erfindungsgemäße Vorrichtung zur geräuschfreien Trennung eines Luft-Wasser-Gemisches weist wenigstens einen ersten Einlass, wenigstens einen ersten Luftauslass, wenigstens einen ersten Wasserauslass und einen Innenbereich auf. Im Inneren des Innenbereichs ist ein Trennbereich angeordnet, wobei der Trennbereich schwingungsentkoppelt befestigt ist. Der wenigstens eine erste Einlass ist oberhalb des Trennbereichs angeordnet. Der Trennbereich weist eine an der Oberseite des Trennbereichs angeordnete Eintrittsöffnung und wenigstens eine an der Unterseite angeordnete Austrittsöffnung auf, wobei die wenigstens eine Austrittsöffnung nicht fluchtend mit dem wenigstens einen ersten Einlass angeordnet ist. Der wenigstens eine erste Wasserauslass ist verschließbar. Bevorzugt ist die Eintrittsöffnung fluchtend mit dem wenigstens einen ersten Einlass.

Der Trennbereich ermöglicht, dass das Wasser zur Ruhe kommen kann und somit Gasbläschen aus dem Wasser entweichen können. Durch die nichtfluchtende Anordnung zwischen dem wenigstens einen ersten Einlass und der wenigstens einen Austrittsöffnung ist ein Abbremsen des Wassers und somit ein Ruhebereich zum Ausgasen vorhanden.

Der Trennbereich ist schwingungsentkoppelt aufgehängt, somit werden keine, durch auf den Trennbereich auftreffendes Wasser, erzeugten Schwingungen an die Umgebung abgegeben, insbesondere wird kein Schall über die verbundenen Festkörper übertragen.

Luft im Sinne der Erfindung umfasst die uns umgebende Luft (etwa 78 Vol.-%Stickstoff, etwa 21 Vol.-%, etwa 1 Vol.-% Argon, Kohlendioxid, Wasserdampf, ...) wie auch andere atembare Gasgemische, zum Beispiel Nitrox (78 bis 60 Vol.-% Stickstoff, 32 bis 40 Vol.-% Sauerstoff), Trimix (bis 21 Vol.-% Sauerstoff, Stickstoff, Helium), Triox (mehr als 21 Vol.-% Sauerstoff, Stickstoff, Helium), Heliox (Sauerstoff, Helium), sowie Bestandteile, beispielsweise Stickstoff, Helium, Argon, Sauerstoff, sowie Mischungen hieraus.

In einer besonders bevorzugten Ausführungsform der Erfindung ist der Trennbereich gegenüber dem Innenbereich schwingungsentkoppelt aufgehängt. Besonders bevorzugt wird der Trennbereich vom Innenbereich umschlossen. Die schwingungsentkoppelnde Aufhängung ist an der Wandung des Innenbereichs angebracht. Dieses hat den Vorteil, dass eine Übertragung des Schalls an die Umgebung schon in der Trennvorrichtung gedämpft oder verhindert wird. Die Schallausbreitung wird also schon dort gehindert, wo der Schall entsteht.

In einer weiteren alternativen Ausführungsform der Erfindung ist der Trennbereich direkt mit dem Innenbereich, insbesondere der Wandung des Innenbereichs verbunden. In dieser Ausführungsform ist die Vorrichtung zur geräuschfreien Trennung eines Luft-Wasser-Gemisches insgesamt schwingungsentkoppelt aufgehängt. Somit ist auch der Trennbereich schwingungsentkoppelt aufgehängt.

In einer weiteren Ausführungsform der Erfindung ist der Trennbereich gegenüber dem Innenbereich schwingungsentkoppelt aufgehängt und die Vorrichtung zur geräuschfreien Trennung eines Luft-Wasser-Gemisches ist insgesamt schwingungsentkoppelt aufgehängt. Hierdurch wird die effiziente Geräuschreduktion erreicht.

In einer weiteren Ausführungsform der Erfindung sind die Summe der Querschnittsflächen der wenigstens einen Austrittsöffnung größer oder gleich der Querschnittsfläche des wenigstens einen ersten Einlasses. Hierdurch kann gewährleistet werden, dass langfristig die in den Trennbereich eintretende Wassermenge auch abfließen kann und es nur kurzzeitig zu einer Anreicherung von Wasser in der Vorrichtung kommen kann. Andernfalls könnte es zu einem Überlauf des Trennbereichs kommen, was zum einen eine schlechtere Luft-Wasser-Trennung und zum anderen eine Geräuschentwicklung verursachen kann.

In einer weiteren Ausführungsform der Erfindung ist wenigstens ein erster Luftauslass an der Oberseite des Innenbereichs angeordnet. Durch die Anordnung an der Oberseite ist eine kompakte Ausführung möglich und das unbeabsichtigte Austreten von Wasser kann vermieden werden.

In einer weiteren Ausführungsform der Erfindung weist der wenigstens eine erste Luftauslass einen Schalldämpfer auf. Der Schalldämpfer setzt der entweichenden Luft einen Widerstand entgegen. Folglich entsteht innerhalb der Vorrichtung ein Überdruck. Der Schalldämpfer besteht beispielsweise aus Polyethylen.

In einer weiteren Ausführungsform der Erfindung weist der wenigstens eine erste Wasserauslass wenigstens einen ersten Verschluss auf, wobei der wenigstens eine erste Verschluss durch sich im unteren Innenbereich sammelndes Wasser selbstöffnend ist. Beispielsweise und bevorzugt ist der wenigstens eine erste Verschluss als Schwimmer ausgeführt. Bevorzugt weist der wenigstens eine erste Verschluss eine Führung auf, welche dem wenigstens einem ersten Verschluss nur einen Freiheitsgrad der Bewegung ermöglicht. Beispielsweise kann die Führung ein Klappschanier sein. Alternativ und bevorzugt kann es sich um Stifte handeln, welche eine ausschließlich senkrechte Bewegung ermöglichen. Besonders bevorzugt beschränkt die Führung auch die maximale Entfernung des wenigstens einen ersten Verschlusses von dem wenigstens einen ersten Wasserauslass. Bevorzugt ist der Schwimmer so ausgelegt, dass er auch unter Druckverhältnissen funktioniert, die im Druckkörper eines Unterseeboots vorkommen können. Beispielsweise kann der Druck im Druckkörper des Unterseeboots bis zu 0,15 MPa betragen, während der Druck im Umgebungswasser, je nach Tauchtiefe des Unterseeboots, von 0,1 bis zu 20 MPa betragen kann.

In einer weiteren Ausführungsform der Erfindung kann der Schwimmer um mindestens die Höhe aufschwimmen, welche der Hälfte des Durchmessers des wenigstens einen ersten Wasserauslasses entspricht. Hierdurch ist die Fläche zwischen dem Rand des wenigstens einen ersten Wasserauslasses und dem Schwimmer genauso groß wie die Querschnittsfläche des wenigstens einen ersten Wasserauslasses. Somit können durch beide Flächen gleich große Mengen an Wasser strömen.

In einer weiteren Ausführungsform der Erfindung kann der Schwimmer um mindestens die Höhe aufschwimmen, welche dem Durchmesser des wenigstens einen ersten Wasserauslasses entspricht. Hierdurch ist die Fläche zwischen dem Rand des wenigstens einen ersten Wasserauslasses und dem Schwimmer doppelt so groß wie die Querschnittsfläche des wenigstens einen ersten Wasserauslasses. Eine weitere Vergrößerung führt nur zu einer Vergrößerung der gesamten Vorrichtung, ohne jedoch Vorteile zu bringen.

In einer weiteren Ausführungsform der Erfindung ist die Wand des Innenbereichs mit einem Elastomer ausgekleidet. Beispielsweise handelt es sich bei dem Elastomer um Nitrilkautschuk, welcher durch Copolymerisation von Acrylnitril und 1,3-Butadien gewonnen wird.

In einer weiteren Ausführungsform der Erfindung weist die Vorrichtung eine Rotationssymmetrie, insbesondere eine zweizählige Rotationssymmetrie, auf.

In einer weiteren Ausführungsform der Erfindung ist die Unterseite des Trennbereichs im Inneren konkav gewölbt ausgeführt. Durch die Wölbung kann erreicht werden, dass die wenigstens eine Austrittsöffnung an der tiefsten Stelle aber nicht fluchtend mit dem wenigstens einen ersten Einlass angeordnet ist. Hierdurch wird vermieden, dass ständig eine Restmenge Wasser im Trennbereich verbleibt, was zu Korrosion führen könnte.

In einer weiteren Ausführungsform der Erfindung weist der Trennbereich einen abgeschrägten Randbereich zwischen der Unterseite des Trennbereichs und der Mantelfläche des Trennbereichs auf, wobei die wenigstens eine Austrittsöffnung im abgeschrägten Randbereich angeordnet ist. Besonders bevorzugt ist eine Mehrzahl an Austrittsöffnungen im abgeschrägten Randbereich angeordnet.

In einer weiteren Ausführungsform der Erfindung ist der Trennbereich mittels zweier gedämpft gelagerter Schrauben an der Oberseite des Innenbereichs befestigt. Hierdurch kann der Trennbereich vom Innenbereich schwingungsentkoppelt befestigt werden.

In einer weiteren Ausführungsform der Erfindung wird der Trennbereich mittels magnetischer Abstoßungskräfte kontaktfrei im Innenbereich angeordnet.

In einer weiteren Ausführungsform der Erfindung ist der Innenbereich mit einem Deckel verschließbar, wobei der Deckel wenigstens einen ersten Einlass und wenigstens einen ersten Luftauslass aufweist. Besonders bevorzugt ist der Innenbereich mit dem Deckel verschlossen.

In einer weiteren Ausführungsform der Erfindung sind an den ersten Einlass und den ersten Wasserauslass elastischer Leitungen angeschlossen. Dieses dient zur Schwingungsentkopplung gegenüber dem weiteren, mit der Vorrichtung verbundenen Leitungssystem, so dass eine Schallausbreitung über das Leitungssystem nicht möglich ist oder zumindest gehemmt wird.

In einer weiteren Ausführungsform der Erfindung weist die Vorrichtung einen ersten Luftauslass und einen zweiten Luftauslass auf, wobei der erste Luftauslass und der zweite Luftauslass gegenüberliegend um den wenigstens einen Einlass angeordnet sind und wobei der erste Luftauslass und der zweite Luftauslass gegenüber jeweils gegenüber dem wenigstens einen Einlass einen Winkel von 15° bis 45°, bevorzugt von 25° bis 35°, aufweisen. Somit weisen der erste Luftauslass und der zweite Luftauslass zueinander einen Winkel von 30° bis 90°, bevorzugt von 50° bis 70°, auf.

In einem weiteren Aspekt betrifft die Erfindung die Verbindungsvorrichtung, wobei die Verbindungsvorrichtung zum Transfer von Objekten zwischen dem Inneren eines Körpers, beispielsweise eines Unterseeboots, und der Umgebung, wobei die Umgebung Wasser ist. Die Verbindungsvorrichtung kann geflutet und belüftet werden, um so den Transfer von Objekten zu ermöglichen. Die Verbindungsvorrichtung weist wenigstens eine erfindungsgemäße Vorrichtung zur geräuschfreien Trennung eines Luft-Wasser-Gemisches auf. Beispielsweise handelt es sich bei der Verbindungsvorrichtung um ein Waffenrohr oder eine Schleuse, beispielsweise eine Boltschleuse oder eine Taucherschleuse. Das Waffenrohr umfasst im Sinne der Erfindung horizontale Waffenrohre, zum Beispiel Torpedorohre, senkrechte Waffenrohre, beispielsweise für den Start von Flugkörpern, wie zum Beispiel Marschflugkörper oder Raketen, sowie beliebig angeordnete Waffenrohre, beispielsweise für Täuschkörper.

In einem weiteren Aspekt betrifft die Erfindung ein Wasserfahrzeug mit wenigstens einer erfindungsgemäßen Vorrichtung zur geräuschfreien Trennung eines Luft-Wasser-Gemisches. Besonders bevorzugt handelt es sich bei dem Wasserfahrzeug um ein Unterseeboot.

Nachfolgend ist die erfindungsgemäße Vorrichtung anhand eines in den Zeichnungen dargestellten Ausführungsbeispiels näher erläutert.
- Fig. 1: Außenansicht
- Fig. 2: Querschnittsdarstellung
- Fig. 3: Aufsicht
- Fig. 4: Querschnittsdarstellung Trennbereich
- Fig. 5: Aufsicht ohne Deckel
- Fig. 6: erster Querschnitt Schwimmer
- Fig. 7: zweiter Querschnitt Schwimmer
- Fig. 8: dritter Querschnitt Schwimmer

Alle Figuren stellen die gleiche beispielhafte Vorrichtung in verschiedenen Ansichten und Querschnitten dar.

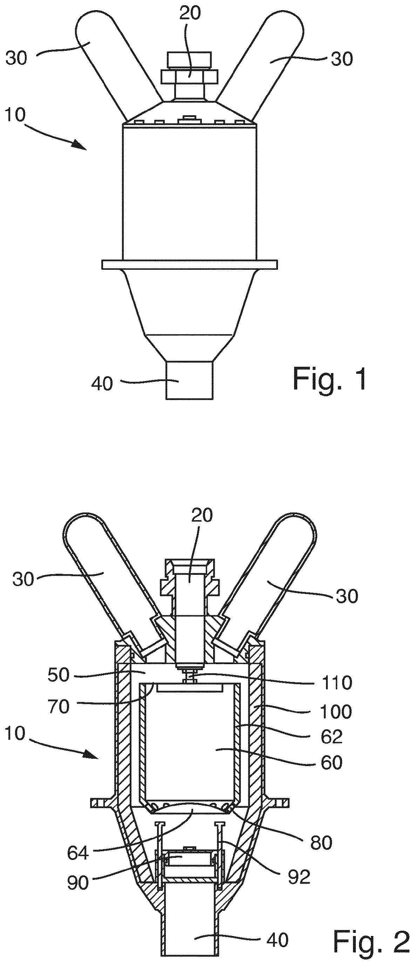

In Fig. 1 ist die Vorrichtung zur geräuschfreien Trennung eines Luft-Wasser-Gemisches 10 von außen gezeigt. Lediglich der Einlass 20, zwei Luftauslässe 30 und ein Wasserauslass 40 sind erkennbar. Der Querschnitt in Fig. 2 zeigt den inneren Aufbau. Der Innenbereich 50 ist mit Elastomer 100 ausgekleidet. Bei dem Elastomer 100 handelt es sich um einen Nitril-Butadien-Kautschuk. Im Innenbereich 50 ist der Trennbereich 60 angeordnet, wobei der Trennbereich 60 eine Mantelfläche 62 und eine Unterseite des Trennbereichs 64 aufweist. Oben weist der Trennbereich 60 eine große Eintrittsöffnung 70 auf, wobei die Eintrittsöffnung 70 fluchtend mit dem Einlass 20 ist. Hierdurch kann das Luft-Wasser-Gemisch direkt in den Trennbereich 60 eintreten. Die schwingungsentkoppelte Befestigung 110 ist hinter dem Einlass 20 angeordnet. Der Trennbereich 60 weist weiter mehrere Austrittsöffnungen 80 auf. Der Trennbereich 60 weist einen abgeschrägten Randbereich zwischen der Unterseite des Trennbereichs 64 und der Mantelfläche 62 des Trennbereichs 60 auf. Die Austrittsöffnungen 80 sind im abgeschrägten Randbereich angeordnet. Die Unterseite des Trennbereichs 64 ist im Inneren des Trennbereichs 60 konkav gewölbt ausgeführt. Durch diese Wölbung wird erreicht, dass die Austrittsöffnungen 80 an der tiefsten Stelle aber nicht fluchtend mit dem Einlass 20 angeordnet sind. Hierdurch wird vermieden, dass ständig eine Restmenge Wasser im Trennbereich 60 verbleibt, was zu Korrosion führen würde. An der Unterseite des Innenbereichs 50 ist ein Verschluss 90 in Form eines Schwimmers angeordnet. Der Verschluss 90 ist an zwei Führungen 92 angeordnet, welche ein senkrechtes Aufsteigen des Verschlusses 90 ermöglichen.

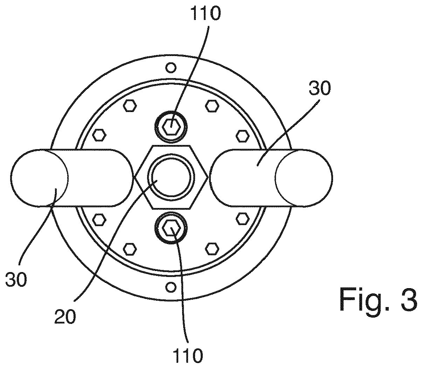

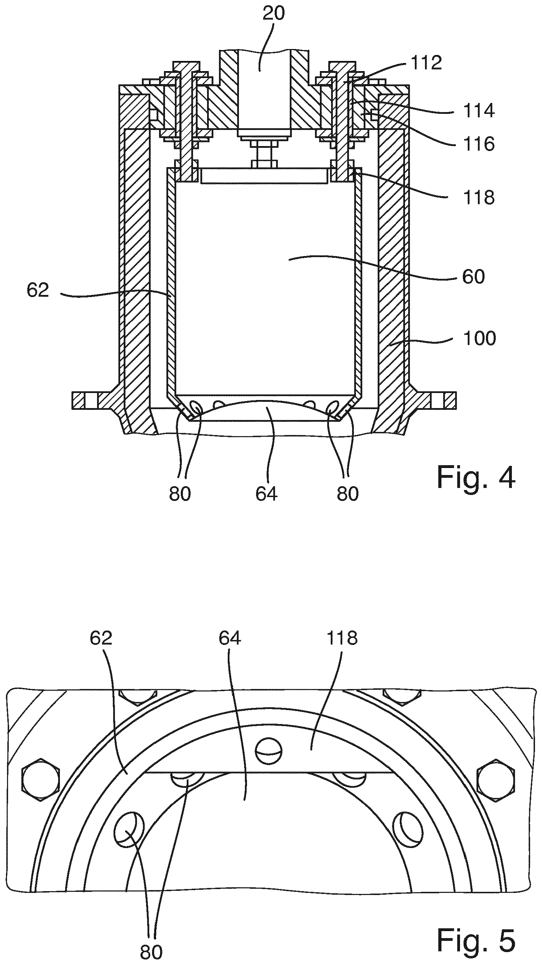

Fig. 3 zeigt eine Aufsicht auf die Vorrichtung zur geräuschfreien Trennung eines Luft-Wasser-Gemisches 10. Zu erkennen sind neben dem Einlass 20 und den beiden Luftauslässen 30 die Position und Anordnung der beiden schwingungsentkoppelten Befestigungen 110, an welchen der Trennbereich 60 im Inneren des Innenbereichs 50 gehalten wird. Diese schwingungsentkoppelten Befestigungen 110 sind in Fig. 4 im Querschnitt dargestellt. Eine durchgehende Schraube 112 verbindet tragend über einen Steg mit Gewindebohrung 118 den Trennbereich 60 mit dem Rest der Vorrichtung 10. Um eine tragende und dennoch schwingungsentkoppelte Verbindung zu realisieren, weist die schwingungsentkoppelte Befestigung 110 eine Abstandsbuchse 114 und eine Gummibuchse 116 auf. Der Steg mit Gewindebohrung 118 ist in Fig. 5 in der Aufsicht gut zu erkennen. Dieser ist so ausgeführt, dass die Eintrittsöffnung 70 nur minimal verkleinert wird, der Trennbereich 60 aber gut gehalten werden kann. In der Aufsicht sind die Austrittsöffnungen 80 gut zu erkennen.

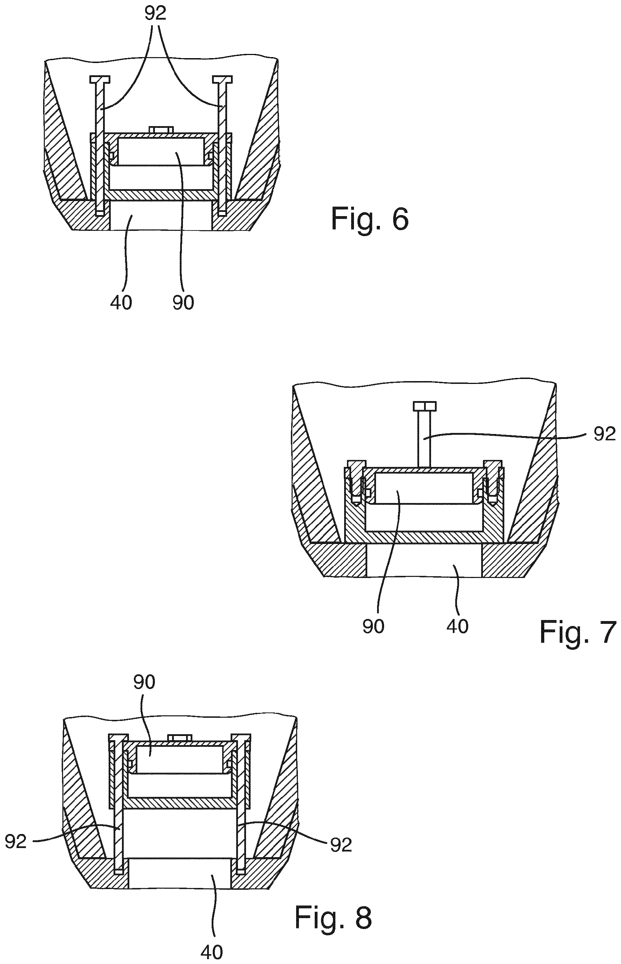

Die Fig. 6, Fig. 7 und Fig. 8 zeigen den Verschluss 90, wobei die Fig. 6 und Fig. 7 jeweils einen Querschnitt um 90° zueinander versetzt zeigen. In den Fig. 6 und Fig. 7 befindet sich der Verschluss 90 in Form eines Schwimmers in der unteren Position, in Fig. 8 in der durch Wasser angehobenen Position. Ein weiteres Aufsteigen des Verschlusses 90 wird durch die Führungen 92 unterbunden. So kann der Verschluss 90 leicht wieder in die Ausgangslage zurück.

Bezugszeichen
- 10: Vorrichtung zur geräuschfreien Trennung eines Luft-Wasser-Gemisches
- 20: Einlass
- 30: Luftauslass
- 40: Wasserauslass
- 50: Innenbereich
- 60: Trennbereich
- 62: Mantelfläche
- 64: Unterseite des Trennbereichs
- 70: Eintrittsöffnung
- 80: Austrittsöffnung
- 90: Verschluss
- 92: Führung
- 100: Elastomer
- 110: schwingungsentkoppelte Befestigung
- 112: Schraube
- 114: Abstandbuchse
- 116: Gummibuchse
- 118: Steg mit Gewindebohrung

## Patentansprüche

1. Vorrichtung zur geräuschfreien Trennung eines Luft-Wasser-Gemisches (10), wobei die Vorrichtung (10) wenigstens einen ersten Einlass (20), wenigstens einen ersten Luftauslass (30), wenigstens einen ersten Wasserauslass (40) und einen Innenbereich (50) aufweist, wobei im Inneren des Innenbereichs (50) ein Trennbereich (60) angeordnet ist, wobei der Trennbereich (60) schwingungsentkoppelt ist, wobei der wenigstens eine erste Einlass (20) oberhalb des Trennbereichs (60) angeordnet ist, wobei der Trennbereich (60) eine an der Oberseite des Trennbereichs (60) angeordnete Eintrittsöffnung (70) und wenigstens eine an der Unterseite angeordnete Austrittsöffnung (80) aufweist, wobei die wenigstens eine Austrittsöffnung (80) nicht fluchtend mit dem wenigstens einen ersten Einlass (20) angeordnet ist, wobei der wenigstens eine erste Wasserauslass (40) verschließbar ist.

2. Vorrichtung (10) nach Anspruch 1, **dadurch gekennzeichnet, dass** die Summe der Querschnittsflächen der wenigstens einen Austrittsöffnung (80) größer oder gleich der Querschnittsfläche des wenigstens einen ersten Einlasses (20) sind.

3. Vorrichtung (10) nach einem der vorstehenden Ansprüche, **dadurch gekennzeichnet, dass** der Trennbereich (60) vom Innenbereich (50) schwingungsentkoppelt ist

4. Vorrichtung (10) nach einem der vorstehenden Ansprüche, **dadurch gekennzeichnet, dass** wenigstens ein erster Luftauslass (30) an der Oberseite des Innenbereichs (50) angeordnet ist.

5. Vorrichtung (10) nach einem der vorstehenden Ansprüche, **dadurch gekennzeichnet, dass** der wenigstens eine erste Luftauslass (30) einen Schalldämpfer aufweist.

6. Vorrichtung (10) nach einem der vorstehenden Ansprüche, **dadurch gekennzeichnet, dass** der wenigstens eine erste Wasserauslass (40) wenigstens einen ersten Verschluss (90) aufweist, wobei der wenigstens eine erste Verschluss (90) durch sich im untere Innenbereich (50) sammelndes Wasser selbstöffnend ist.

7. Vorrichtung (10) nach Anspruch 6, **dadurch gekennzeichnet, dass** der wenigstens eine erste Verschluss (90) als Schwimmer ausgeführt ist.

8. Vorrichtung (10) nach Anspruch 7, **dadurch gekennzeichnet, dass** der Schwimmer um mindestens die Höhe aufschwimmen kann, welche der Hälfte des Durchmessers des wenigstens einen ersten Wasserauslasses (40) entspricht, und wobei der Schwimmer um maximal die Höhe aufschwimmen kann, welche dem Durchmesser des wenigstens einen ersten Wasserauslasses (40) entspricht.

9. Vorrichtung (10) nach einem der vorstehenden Ansprüche, **dadurch gekennzeichnet, dass** die Wand des Innenbereichs (50) mit einem Elastomer (100) ausgekleidet ist.

10. Vorrichtung (10) nach einem der vorstehenden Ansprüche, **dadurch gekennzeichnet, dass** die Unterseite des Trennbereichs (64) im Inneren konkav gewölbt ausgeführt ist.

11. Vorrichtung (10) nach einem der vorstehenden Ansprüche, **dadurch gekennzeichnet, dass** der Trennbereich (60) einen abgeschrägten Randbereich zwischen der Unterseite des Trennbereichs (64) und der Mantelfläche (62) des Trennbereichs (60) aufweist, wobei die wenigstens eine Austrittsöffnung (80) im abgeschrägten Randbereich angeordnet ist.

12. Vorrichtung (10) nach einem der vorstehenden Ansprüche, **dadurch gekennzeichnet, dass** der Trennbereich (60) mittels zweier gedämpft gelagerter Schrauben an der Oberseite des Innenbereichs (50) befestigt ist.

13. Vorrichtung (10) nach einem der vorstehenden Ansprüche, **dadurch gekennzeichnet, dass** der Innenbereich (50) mit einen Deckel verschließbar ist, wobei der Deckel wenigstens einen ersten Einlass (20) und wenigstens einen ersten Luftauslass (30) aufweist.

14. Vorrichtung (10) nach einem der vorstehenden Ansprüche, **dadurch gekennzeichnet, dass** die Vorrichtung (10) einen ersten Luftauslass (30) und einen zweiten Luftauslass (30) aufweist, wobei der erste Luftauslass (30) und der zweite Luftauslass (30) gegenüberliegend um den wenigstens einen Einlass (20) angeordnet sind und wobei der erste Luftauslass (30) und der zweite Luftauslass (30) gegenüber jeweils gegenüber dem wenigstens einen Einlass (20) einen Winkel von 15° bis 45°, bevorzugt von 25° bis 35°, aufweisen.

## Claims

1. Device for noise-free separation of an air/water mixture (10), wherein the device (10) comprises at least one first inlet (20), at least one first air outlet (30), at least one first water outlet (40) and an inner region (50), wherein a separating region (60) is arranged in the interior of the inner region (50), wherein the separating region (60) is decoupled in terms of vibration, wherein the at least one first inlet (20) is arranged above the separating region (60), wherein the separating region (60) comprises an entry opening (70) arranged on the top side of the separating region (60) and at least one exit opening (80) arranged on the bottom side, wherein the at least one exit opening (80) is not arranged in alignment with the at least one first inlet (20), wherein the at least one first water outlet (40) is able to be closed off.

2. Device (10) according to Claim 1, **characterized in that** the sum of the cross-sectional areas of the at least one exit opening (80) is greater than or equal to the cross-sectional area of the at least one first inlet (20).

3. Device (10) according to either of the preceding claims, **characterized in that** the separating region (60) is decoupled in terms of vibration from the inner region (50).

4. Device (10) according to one of the preceding claims, **characterized in that** at least one first air outlet (30) is arranged on the top side of the inner region (50).

5. Device (10) according to one of the preceding claims, **characterized in that** the at least one first air outlet (30) comprises a sound damper.

6. Device (10) according to one of the preceding claims, **characterized in that** the at least one first water outlet (40) comprises at least one first closure (90), wherein the at least one first closure (90) opens of itself by way of water collecting in the inner region (50) in a lower position.

7. Device (10) according to Claim 6, **characterized in that** the at least one first closure (90) is designed as a float.

8. Device (10) according to Claim 7, **characterized in that** the float can float around at least the height which corresponds to half the diameter of the at least one first water outlet (40), and wherein the float can float around at most the height which corresponds to the diameter of the at least one first water outlet (40).

9. Device (10) according to one of the preceding claims, **characterized in that** the wall of the inner region (50) is lined with an elastomer (100).

10. Device (10) according to one of the preceding claims, **characterized in that** the bottom side of the separating region (64) is of concavely curved design in the interior.

11. Device (10) according to one of the preceding claims, **characterized in that** the separating region (60) comprises a bevelled boundary region between the bottom side of the separating region (64) and the lateral surface (62) of the separating region (60), wherein the at least one exit opening (80) is arranged in the bevelled boundary region.

12. Device (10) according to one of the preceding claims, **characterized in that** the separating region (60) is fastened to the top side of the inner region (50) by means of two screws which are mounted in a damped manner.

13. Device (10) according to one of the preceding claims, **characterized in that** the inner region (50) is able to be closed off by a lid, wherein the lid comprises at least one first inlet (20) and at least one first air outlet (30).

14. Device (10) according to one of the preceding claims, **characterized in that** the device (10) comprises a first air outlet (30) and a second air outlet (30), wherein the first air outlet (30) and the second air outlet (30) are arranged oppositely around the at least one inlet (20), and wherein the first air outlet (30) and the second air outlet (30), in each case with respect to the at least one inlet (20), have an angle of 15° to 45°, preferably of 25° to 35°.

## Revendications

1. Dispositif permettant une séparation silencieuse d'un mélange air/eau (10), le dispositif (10) comprenant au moins une première entrée (20), au moins une première sortie d'air (30), au moins une première sortie d'eau (40) et une zone intérieure (50), une zone de séparation (60) étant disposée à l'intérieur de la zone intérieure (50), la zone de séparation (60) étant découplée en termes de vibrations, ladite au moins une première entrée (20) étant disposée au-dessus de la zone de séparation (60), la zone de séparation (60) comprenant une ouverture d'entrée (70) disposée au niveau du côté supérieur de la zone de séparation (60) et au moins une ouverture de sortie (80) disposée au niveau du côté inférieur, ladite au moins une ouverture de sortie (80) n'étant pas disposée de manière alignée avec ladite au moins une première entrée (20), ladite au moins une première sortie d'eau (40) pouvant être fermée.

2. Dispositif (10) selon la revendication 1, **caractérisé en ce que** la somme des aires de section transversale de ladite au moins une ouverture de sortie (80) est supérieure ou égale à l'aire de section transversale de ladite au moins une première entrée (20).

3. Dispositif (10) selon l'une des revendications précédentes, **caractérisé en ce que** la zone de séparation (60) est découplée de la zone intérieure (50) en termes de vibrations.

4. Dispositif (10) selon l'une des revendications précédentes, **caractérisé en ce qu'**au moins une première sortie d'air (30) est disposée au niveau du côté supérieur de la zone intérieure (50).

5. Dispositif (10) selon l'une des revendications précédentes, **caractérisé en ce que** ladite au moins une première sortie d'air (30) comprend un amortisseur de son.

6. Dispositif (10) selon l'une des revendications précédentes, **caractérisé en ce que** ladite au moins une première sortie d'eau (40) comprend au moins une première fermeture (90), ladite au moins une première fermeture (90) s'ouvrant automatiquement au moyen de l'eau s'accumulant dans la zone intérieure inférieure (50).

7. Dispositif (10) selon la revendication 6, **caractérisé en ce que** ladite au moins une première fermeture (90) est réalisée en tant que flotteur.

8. Dispositif (10) selon la revendication 7, **caractérisé en ce que** le flotteur peut monter sur au moins la hauteur qui correspond à la moitié du diamètre de ladite au moins une première sortie d'eau (40), et le flotteur pouvant monter sur au maximum la hauteur qui correspond au diamètre de ladite au moins une première sortie d'eau (40).

9. Dispositif (10) selon l'une des revendications précédentes, **caractérisé en ce que** la paroi de la zone intérieure (50) est revêtue d'un élastomère (100).

10. Dispositif (10) selon l'une des revendications précédentes, **caractérisé en ce que** le côté inférieur de la zone de séparation (64) est réalisé de manière bombée de façon concave à l'intérieur.

11. Dispositif (10) selon l'une des revendications précédentes, **caractérisé en ce que** la zone de séparation (60) comprend une zone de bord biseautée entre le côté inférieur de la zone de séparation (64) et la surface d'enveloppe (62) de la zone de séparation (60), ladite au moins une ouverture de sortie (80) étant disposée dans la zone de bord biseautée.

12. Dispositif (10) selon l'une des revendications précédentes, **caractérisé en ce que** la zone de séparation (60) est fixée au côté supérieur de la zone intérieure (50) au moyen de deux vis montées de manière amortie.

13. Dispositif (10) selon l'une des revendications précédentes, **caractérisé en ce que** la zone intérieure (50) peut être fermée à l'aide d'un couvercle, le couvercle comportant au moins une première entrée (20) et au moins une première sortie d'air (30).

14. Dispositif (10) selon l'une des revendications précédentes, **caractérisé en ce que** le dispositif (10) comprend une première sortie d'air (30) et une deuxième sortie d'air (30), la première sortie d'air (30) et la deuxième sortie d'air (30) étant disposées de manière opposée autour de ladite au moins une entrée (20) et la première sortie d'air (30) et la deuxième sortie d'air (30) présentant respectivement par rapport à ladite au moins une entrée (20) un angle de 15° à 45°, de préférence de 25° à 35°.
